# EUROPEAN PATENT APPLICATION

(11) **EP 1 417 948 A1**
(43) Date of publication of application: **12.05.2004**
(21) Application number: 03256757.0
(22) Date of filing: 27.10.2003
(51) Int. Cl.: A61G 5/04

(54) **Transportable powered wheelchair**

(30) Priority: 28.10.2002 US 422006 P; 28.05.2003 US 473702 P
(71) Applicant: Pride Mobility Products, Corporation, Exeter, PA 18643 (US)
(72) Inventor: Grymko, Christopher, Plains, PA 18705 (US); Taylor, Paul M., West Wyoming, PA 18644 (US); Whittington, Mark, Clarks Summit, PA 18411 (US); White, Gerald, Hunlock Creek, PA 18621 (US)
(74) Representative: McNally, Roisin

(57) **Abstract**

A transportable powered wheelchair is provided which employs a variety of detachable modules to facilitate transport and storage. Further, the powered wheelchair may be readily disassembled/reassembled without the need for or use of tools. The powered wheelchair includes a power supply unit, a pair of primary drive wheels, a drive train subassembly rotatably mounting and independently driving one of the drive wheels. The powered wheelchair is further characterized by first and second main frame subassemblies each mounting one of the drive train subassemblies and detachably mounting the power supply unit therebetween. At least one cross member connects the main frame subassemblies and includes a detachable mount disposed intermediate the main frame subassemblies. The first and second main frame subassemblies and cross member, in combination, define a base or main frame assembly. Further, a seat is detachably mounted to the main frame assembly. In the preferred embodiment, at least a portion of the cross member remains attached to one of the main frame subassemblies when the wheelchair is disassembled for transport. Seat, footrest, and power unit support assemblies are described wherein each is detachably mounted to one or both of the main frame subassemblies.

## Description

### Related Application

This application is related to, and claims the benefit of, co-pending, commonly-owned Provisional Applications SN 60/422006 for a "Transportable Wheelchair" filed on October 28, 2002, and SN 60/473702 for a "Transportable Wheelchair" filed on May 28, 2003.

### Technical Field

The present invention relates to power wheelchairs, and more particularly to a new and useful power wheelchair which facilitates assembly/disassembly for ease of transportation and storage.

### Background of the Invention

Self-propelled or powered wheelchairs have vastly improved the mobility/transportability of the disabled and/or handicapped. Whereas in the past, disabled/handicapped individuals were nearly entirely reliant upon the assistance of others for transportation, the Americans with Disabilities Act (ADA) of June 1990 has effected sweeping changes to provide equal access and freedom of movement/mobility for disabled individuals. Notably, various structural changes have been mandated to the construction of homes, offices, entrances, sidewalks, and even parkway/river crossing, e.g., bridges, to include enlarged entrances, powered doorways, entrance ramps, curb ramps, etc., to ease mobility for disabled persons in and around society.

Along with these societal changes, has brought an opportunity to offer better, more agile, longer-running and/or more stable powered wheelchairs to take full advantage of the new freedoms imbued by the ADA. More specifically, various technologies, initially developed for the automobile and aircraft industries, are being successfully applied to powered wheelchairs to enhance the ease of control, improve stability, and/or reduce wheelchair weight and bulk. For example, sidearm controllers, i.e., multi-axis joysticks, employed in high technology VTOL and fighter aircraft, are being utilized for controlling the speed and direction of powered wheelchairs. Innovations made in the design of automobile suspension systems, e.g., active suspension systems, which vary spring stiffness to vary ride efficacy, have also been adapted to wheelchairs to improve and stabilize powered wheelchairs. Other examples include the use of high-strength fiber reinforced composites, e.g. graphite, fiberglass, etc. to improve the strength of the wheelchair frame while reducing weight and bulk.

One particular system which has gained widespread popularity/acceptance is mid-wheel drive powered wheelchairs, and more particularly, such powered wheelchairs with independently driven and controlled drive wheels. Mid-wheel powered wheelchairs are designed to position the drive wheels, i.e., the rotational axes thereof, slightly forward of the occupant's Center Of Gravity (COG) to provide enhanced mobility and maneuverability. Further, the ability to independently control the speed and torque of each wheel vastly improves the maneuverability, particularly in the yaw axis, of powered wheelchairs. That is, the drive wheels may be driven in opposite directions to enable yaw or heading changes with essentially a zero turn radius. The wheelchair, therefore, can turn within very confined areas and at essentially double the rate. Such mid-wheel powered wheelchairs are disclosed in Schaffner et al. U.S. Patents 5,944,131 & 6,129,165, both issued and assigned to Pride Mobility Products Corporation located in Exeter, Pennsylvania.

While such wheelchair designs have vastly improved the capability and stability of powered wheelchairs, designers thereof are continually being challenged to examine and improve wheelchair design and construction. While these are all welcome advances, they necessarily add weight and complexity to the vehicle.

Contemporary powered wheelchairs, which may include as many as three power supply units (e.g. batteries), a seat, footrest, a main structural frame, drive train assembly other sundry items, can weigh on the order of between 200-300 lbs. It will be appreciated, therefore, that even the most physically able individual will require some form of assistance when transporting the wheelchair to other destinations. In an effort to ameliorate the transportability of such powered wheelchairs, various designs have been attempted or adopted each having limited degrees of success. Perhaps the best known example are those which are used in combination with a ramp or elevator for rolling or lifting the wheelchair into a vehicle. These "powered lift systems", as one may readily appreciate, are expensive and are limited in use on vehicles sufficient size to accommodate the assembled wheelchair. Accordingly, the expense is compounded by the need for a van or other large utility vehicle.

Other wheelchairs employ folding frames or removable assemblies in an effort to reduce their weight and/or bulk. As such, these wheelchairs may be stowed/transported in vehicles having a smaller payload capacity. While these wheelchairs have improved the transportability, they typically require the disassembly of multiple of components, e.g., fasteners, pin C-rings, and clamps etc., to yield a individual assemblies of appropriate size and/or weight. Furthermore, Alternatively, other designs require the use of special tools to "break-down" or fold the various wheelchair components. Kramer, Jr. et al. US patent 6,220,382 discloses a wheelchair having a separable frame which, allegedly, does not require the use of special tools, but requires the breakdown of as many as eight separate elements, some small and others large in size. These designs, exemplified by the Kramer, Jr. et al. '382 patent, do not facilitate rapid disassembly and/or reassembly, and, furthermore create an unwelcome opportunity to misplace, omit or improperly install smaller assembly items, e.g., fasteners, pins, washers, adjustment knobs, etc. Consequently, such prior art wheelchairs lack the versatility that they (i.e., the design) sought to achieve.

A, need, therefore exists to provide a transportable wheelchair having a modular design, i.e., permitting assembly and disassembly in a rapid and expedited fashion, minimizes the number of assemblies, eliminates the potential for omission of smaller parts or improper reassembly, and enhances the ability to handle/manipulate subassemblies.

### Summary of the Invention

A transportable powered wheelchair is provided which employs a variety of detachable modules to facilitate transport and storage. Further, the powered wheelchair may be readily disassembled/reassembled without the need for or use of tools. The powered wheelchair includes a power supply unit, a pair of primary drive wheels, a drive train subassembly rotatably mounting and independently driving one of the drive wheels. The powered wheelchair is further characterized by first and second main frame subassemblies each mounting one of the drive train subassemblies and detachably mounting the power supply unit therebetween. At least one cross member connects the main frame subassemblies and includes a detachable mount disposed intermediate the main frame subassemblies. The first and second main frame subassemblies and cross member, in combination, define a base or main frame assembly. Further, a seat is detachably mounted to the main frame assembly.

In one embodiment of the invention, at least a portion of the cross member remains attached to one of the main frame subassemblies when the wheelchair is disassembled for transport. Seat, footrest, and power unit support assemblies are described wherein each is detachably mounted to one or both of the main frame subassemblies.

### Brief Description of the Drawings

For the purpose of illustrating the invention, there is shown in the drawings various forms that are presently preferred; it being understood, however, that this invention is not limited to the precise arrangements and constructions particularly shown.

Figure 1 is a perspective view of a transportable powered wheelchair according to the present invention wherein various modules have been assembled including a pair of main frame subassemblies structurally interconnected by detachable cross members, a seat support assembly, a footrest support assembly, and a power supply support assembly.

Figure 2 is a side profile view of one of the main frame subassemblies according to the present invention.

Figure 3a is an exploded view of the seat support assembly according to the present invention.

Figure 3b is an isolated perspective view of the assembled wheelchair main frame disposed in combination with the seat support assembly.

Figure 3c is a partially broken away side view of the seat in combination with the seat support assembly.

Figure 3d is an isolated side view of a seat supporting cross member having ball clamps at each end for engaging ball posts

Figure 3e is a broken away side view of a ball clamp assembly.

Figure 4 is a broken away side view of the seat and seat support assembly illustrating the engagement of forward and aft channels with the span bars of the seat supporting cross members.

Figure 5a is an enlarged broken away side view of the forward channel in combination with the forward span bar and a latching mechanism for retaining the forward channel.

Figure 5b is an isolated perspective view of the latching mechanism for retaining the forward channel.

Figure 5c is a broken away front view of the latching mechanism illustrating the engaged and disengaged positions thereof.

Figure 6 is an alternate embodiment of the mounting means for connecting a span bar to a vertical post.

Figure 7a is a broken away front view of the wheelchair main frame including a pair of a frontal cross members for supporting the foot rest assembly.

Figure 7b is an isolated perspective view of the wheelchair main frame with the foot rest assembly removed therefrom to illustrate its connection to the frontal cross members.

Figure 7c is a cross-sectional view taken substantially along line 7c - 7c of Fig. 7a.

Figure 7d is an isolated perspective view of the frontal cross members broken away from the wheelchair main frame.

Figure 7e is an enlarged view of an upper clevis for joining a frontal cross member to a main frame subassembly.

Figure 7f is an enlarged view of a lower clevis for joining a frontal cross member to a main frame subassembly.

Figure 8a is an alternate embodiment of the foot rest support assembly wherein the foot rest structurally joins segments of the frontal cross members portions to structurally interconnect the main frame subassemblies.

Figure 8b is an enlarged perspective and exploded view of the detachable mount effected by a mounting bracket of the foot rest assembly.

Figure 8c is an enlarged perspective view of the assembled detachable mount of the foot rest assembly.

Figure 8d is a cross-sectional view taken substantially along line 8d - 8d of Fig. 8a.

Figure 9a is an exploded view of the power supply support assembly including a pair of battery boxes engaging a pair of rails disposed in combination with the main frame subassemblies.

Figure 9b is a cross-sectional view taken substantially along line 9b - 9b of Fig. 9a.

Figure 9c is an enlarged broken away perspective view of a latching mechanism for retaining the battery boxes relative to the rails.

Figure 9d is a cross-sectional view taken substantially along line 9d - 9d of Fig. 9a.

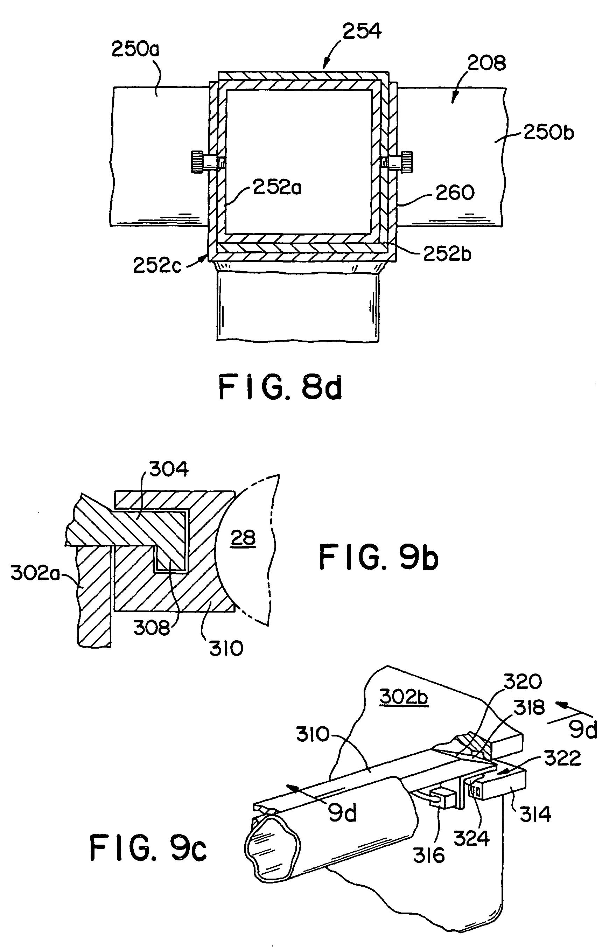

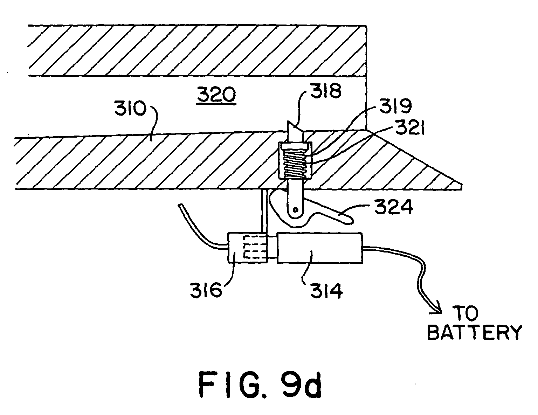

Figure 9d is a cross-sectional view taken substantially along line 9d - 9d of Fig. 9c.

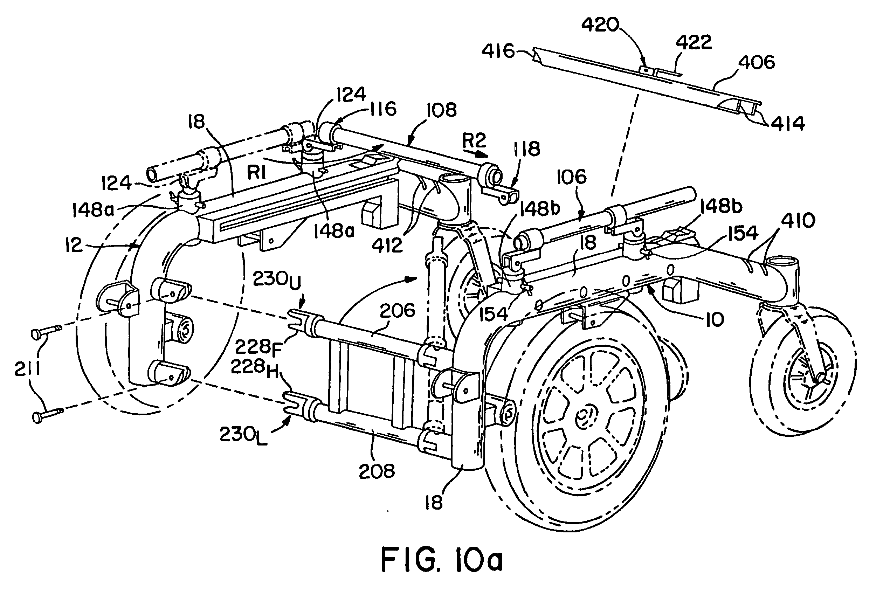

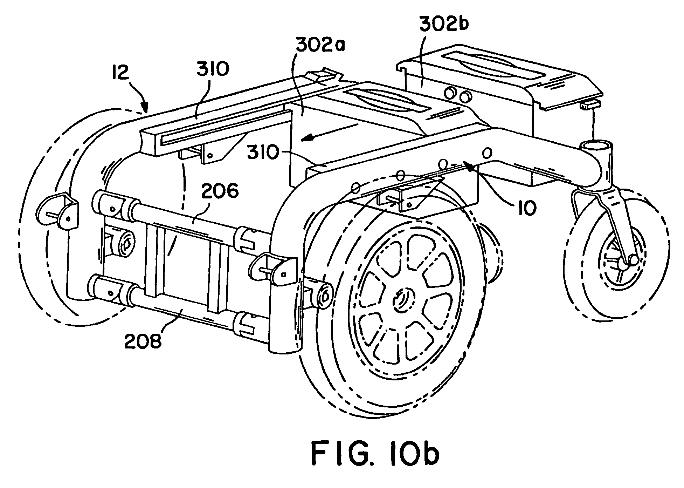

Figure 10a is a isolated perspective view of the wheelchair main frame depicting the assembly/disassembly of the frontal cross members and the seat supporting cross members.

Figure 10b is an isolated perspective view of the wheelchair main frame depicting the installation of the power supply unit.

### Detailed Description of the Drawings

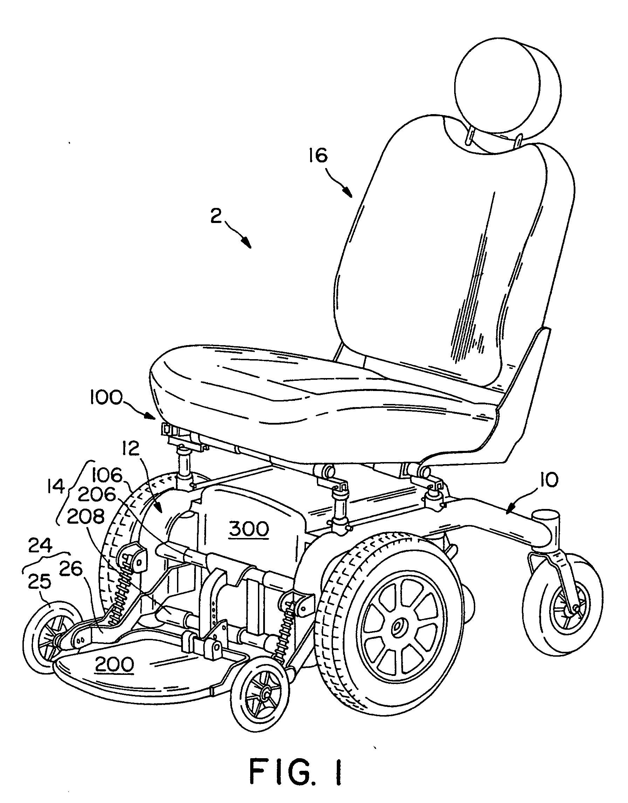

Referring now to the drawings wherein like reference numerals identify like elements, components, subassemblies etc., Fig. 1 depicts a perspective view, of an exemplary embodiment of the inventive transportable powered wheelchair 2.

The transportable wheelchair 2 according to the present invention will be described in the context of a mid-wheel drive powered wheelchair, although, the invention is readily adaptable to other powered wheelchair configurations. Mid-wheel drive powered wheelchairs are characterized by the location of the primary drive wheels being disposed under the center of gravity of the wheelchair occupant, and more accurately, slightly forward of the occupant's center of gravity. Such mid-wheel drive wheelchairs are preferable to forward or rear drive wheelchairs inasmuch as such mid-wheel drive wheelchairs exhibit superior handling and stability characteristics. Further, the powered wheelchair 2 described herein includes anti-tip wheels for improved stability, however, the teachings of the present invention are equally applicable to wheelchair designs without an anti-tip system.

The powered wheelchair 2 includes several modules and assemblies which may be broken-down into manageable sections for an individual (having normal strength and dexterity) to assembly/disassemble for transport. The phrase "manageable sections" means that the various modules, assemblies and/or subassemblies are each under a threshold weight, e.g., under 30 lbs. In addition to the modularization of the powered wheelchair 2, the disassembly and reassembly thereof is to be performed without the use of special tools. In fact, the disassembly/reassembly is preferably to be performed without tools of any kind, i.e., such operations are to be performed manually or by hand.

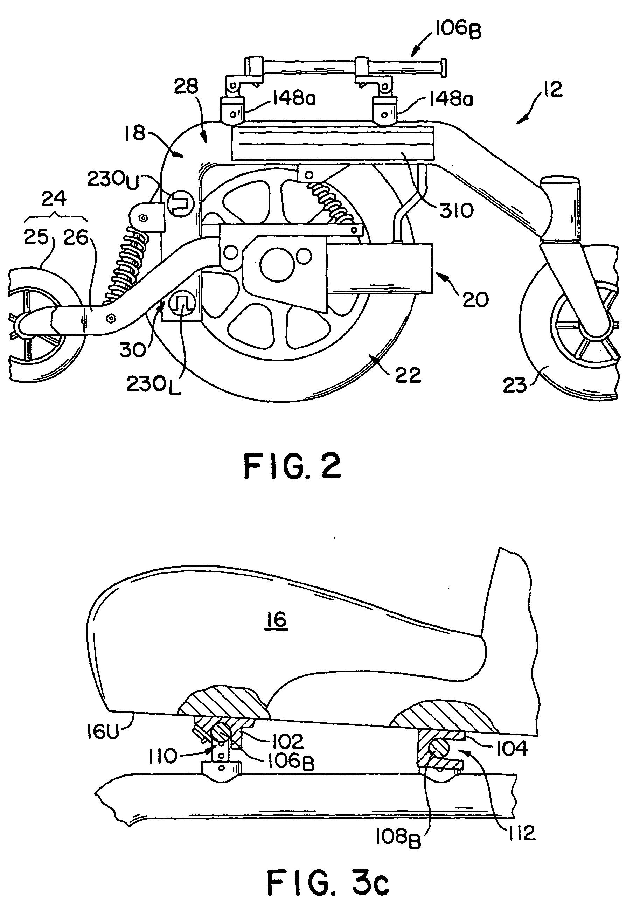

In the broadest sense of the invention, and referring to Figs. 1 and 2, the powered wheelchair 2 comprises first and second main frame subassemblies 10 and 12, respectively, and one or more cross members 14 connecting the main frame subassemblies 10, 12. The main frame subassemblies 10, 12 and cross member 14 define a base or main frame assembly. At least one of the cross members 14 has a detachable mount disposed at a position between said main frame subassemblies 10,12. Further, a seat 16 is detachably mounted to the main frame assembly.

The invention will first be described in terms of the individual modules and assemblies, which when assembled, produce a structurally-efficient transportable powered wheelchair 2. Subsequently, the discussion will focus on the assembly/disassembly of the wheelchair to gain a better appreciation for the various teachings of the invention. The description is, therefore, organized in the following order: I) Main Frame Subassemblies, II) Seat Support Assembly, III) Footrest Support Assembly, IV) Power Supply Support Assembly, and V) Wheelchair Assembly/Disassembly.

### Main Frame Subassemblies

Inasmuch as the main frame subassemblies 10, 12 are essentially identical, but for the particulars associated with the mounting of each cross member support, only one of the subassemblies 10, 12 will be described. In Fig. 2, therefore, a profile view of the main frame subassembly 12 is depicted along an inwardly facing side, i.e., a side which, when assembled, faces inwardly toward the opposed subassembly 10. The main frame subassembly 12 includes a side frame support 18 which carries a drive train subassembly 20 of the wheelchair propulsion system. The drive train subassembly 20 is pivotally mounted to the side frame support 18 and independently drives a primary drive wheel 22. Inasmuch as each of the primary drive wheels 22 is independently driven, the powered wheelchair 2 may be easily maneuvered in confined areas due to the ability to drive each wheel 22 in opposite directions. As mentioned earlier, this drive train/wheel configuration is known as a mid-wheel drive powered wheelchair and includes a rear caster 23 for supporting the wheelchair 2 on at least three wheels, i.e., the two primary drive wheels 22 and at least one rear caster 23. In the preferred embodiment, each of the main frame subassemblies 10, 12 includes a rear caster 23, hence, the wheelchair 2 rides upon and is supported by four wheels, i.e., two primary drive wheels 22 and two rear casters 23.

In Figs. 1 and 2, the main frame subassembly 12 may include an anti-tip system 24 having a forward anti-tip wheel 25 mounted to an end of a suspension arm 26. Briefly, the anti-tip system 24 is responsive to accelerations of the wheelchair, i.e., changes to applied torque to raise or lower the forward anti-tip wheel 25. By raising the anti-tip wheel 25, the curb climbing ability of the wheelchair 2 is improved and, by lowering the anti-tip wheel 25, the pitch stability of the wheelchair 2 is enhanced. An anti-tip system 24 of the type described herein, is more fully described and discussed and commonly-owned U.S. patent 6,129,165. For the purposes of clarity and conciseness, the anti-tip system will not be further discussed herein and the description found in U.S. patent 6,129,165 is incorporated herein by reference in its entirety.

Also shown are elements of other modules and/or assemblies which structurally interconnect the main frame subassemblies 10, 12. These will not be discussed in detail at this time, but merely mentioned to provide a frame of reference for related elements discussed later in the description. For example, a span bar 106_{B} of the seat support assembly 100 is disposed in combination with an upper portion 28 (see Fig. 2) of the side frame support 18. The structure and function of the span bar 106_{B} will be discussed in greater detail hereinafter, however, suffice it to say, at this juncture, that the span bar 106_{B} is reconfigurable to function, on the one hand, as a structural cross member 14, and, on the other hand, as a lifting handle for the respective main frame subassembly 12. A portion of two clevis attachments 230_{U}, 230_{L} are also shown mounted to a forward portion 30 of the side frame support 18 for detachably mounting forward cross members 206, 208 (Fig. 1). The foot rest assembly 200 is mounted in combination with the forward cross members 206, 208. Further, a longitudinal mounting rail 310 (Fig. 2) is disposed in combination with the upper portion 28 of the side frame support 18 for detachably mounting the power supply unit 300 (Fig. 1).

### Seat/Seat Support Assembly

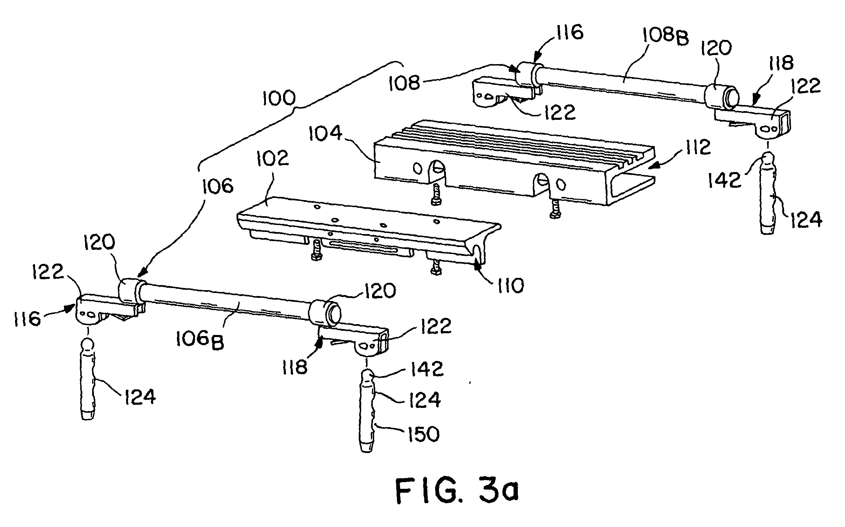

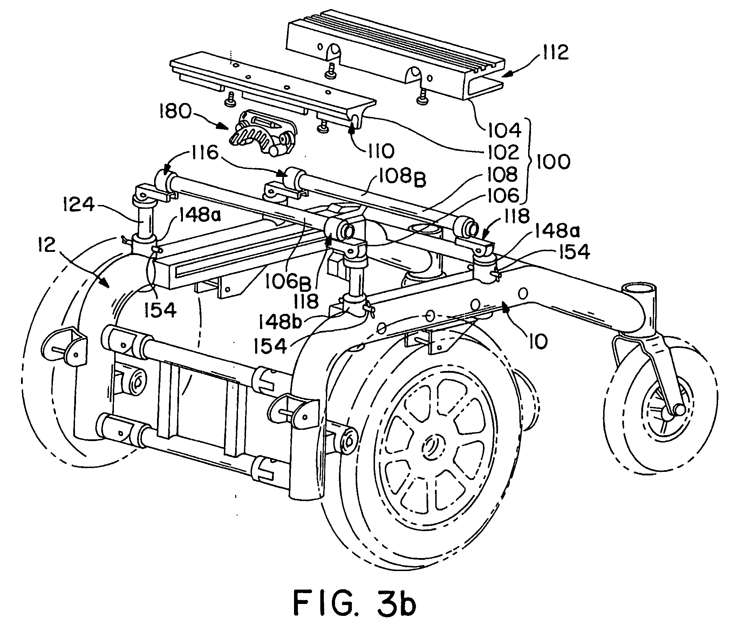

In Figs. 3a - 3c, the seat support assembly 100 is detachably mounted to each of the main frame subassemblies 10, 12 (Fig. 3b) and, in addition to supporting the wheelchair seat 16 (Fig. 3c), functions to structurally interconnect main frame subassemblies 10, 12. More specifically, the seat support assembly 100 comprises forward and aft support channels 102, 104 which are mounted to the underside 16U of the seat 16 and engage seat supporting cross members 106, 108. The forward channel 102 has a generally inverted J-shaped cross section and has channel opening 110 facing downwardly. The aft channel 104 has a substantially C-shaped cross sectional configuration and has an opening 112 facing aft or rearwardly. Further, each of the channels 102, 104 is disposed laterally across the seat and engages span bars 106_{B}, 108_{B} of respective cross members 106, 108.

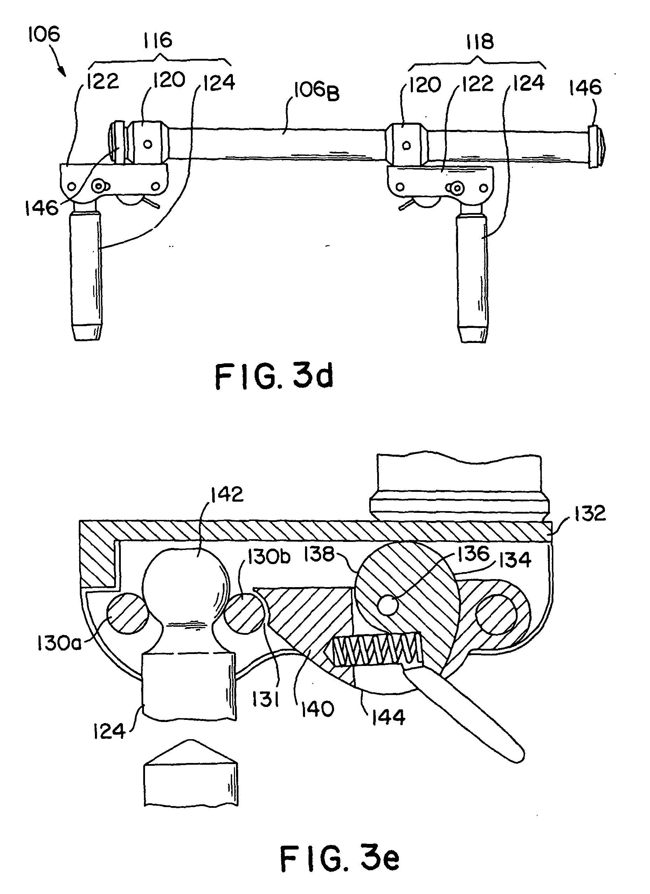

In Figs. 3d and 3e, the seat supporting cross members 106, 108 further comprise ball-clamps 116, 118 disposed at the proximal ends of each of the span bars 106_{B}, 108_{B}. Inasmuch as the cross members 106, 108 are essentially identical, the figures only depicts the forward cross member 106 together with the left or far-side ball-clamp 116. The following discussion, therefore is equally applicable to the aft cross member 108. Fig. 3d depicts the forward cross member 106 fully assembled, i.e., having the ball-clamps 116, 118 disposed in combination with the span bar 106_{B}, and a ball post 124. In Figs. 3d and 3e, each of the ball-clamps 116, 118 includes a collar 120 (see Fig. 3d) circumscribing the span bar 106_{B} and a socket assembly 122 for engaging a ball post 124.

In Fig. 3e, the socket assembly 122 includes a pair of spaced-apart parallel pins 130a, 130b wherein at least one of the pins 130a, 130b is movable within a transverse slot 131 of the socket housing 132. An activation lever 134 is operable to vary the spacing between the pins to capture the ball post 124. More specifically, the lever 134 is rotatably mounted within the socket housing 134 about a pin 136 and has an over-center cam surface 138. Further, a sliding block 140 abuts the moveable pin 130b and is interposed between the moveable pin 130b and the cam surface 138 of the lever 132. In operation, a spherical head 142 of the ball post 124 is disposed within the housing 134 and between the pins 130a, 130b. The lever 134, which is spring biased for rotation about the pin 136, is rotated to cause the cam surface 138 to engage the sliding block 140, thus effecting transverse displacement of the block 140 and, consequently, the pin 130b. The displacement of the pin 130b captures the spherical head 142, i.e., by reducing the spacing between the pins 130a, 130b. Further, the lever 134 is held in place by a spring 144 which biases the lever 134 in an over-center position. To release the ball post 124, the lever 134 is rotated in the opposite direction to increase the pin spacing, thereby releasing the spherical head 142 of the ball post 124.

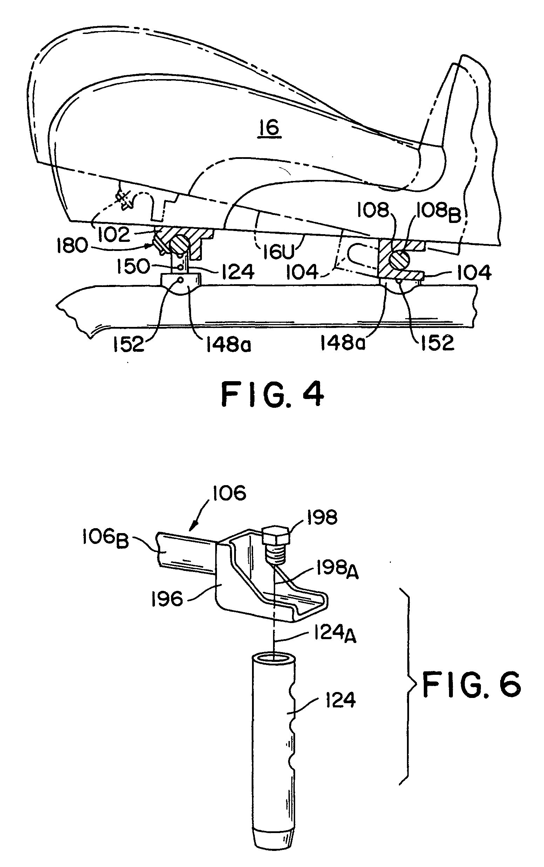

Referring again to Fig. 3d, the collars 120 circumscribe the span bar 106_{B} and are retained by flanges 146 at the terminal ends of the span bar 106_{B}. Further, at least one of the collars 120 of the cross member 106 is slideably mounted to the span bar 106_{B} to permit one of the ball clamps 116, 118 to traverse longitudinally along the span bar 106_{B}. One of the collars 120 is affixed to an end of the span bar 106_{B}, while the other is free to slide along the span bar 106_{B} for positioning between the main frame subassemblies 10, 12 or, as seen in Fig. 4, positioning between a pair of mounting sleeves 148a along each of the side frame supports 18. As will be seen and discussed in subsequent figures, this configuration enables the cross members 106, 108 to function, on the one hand, as load bearing members to structurally interconnect the main frame subassemblies 10, 12 and, on the other hand, to function as a handle for lifting each of the subassemblies 10, 12 when disassembled for transport.

In Figs. 3b and 4, the ball posts 124 are received within mounting sleeves 148a, 148b disposed along the upper portion 28 of the side frame support 18. In Fig. 4, only the mounting sleeves 148a are visible, i.e., the sleeves 148a associated with the far-side main frame subassembly 12, The ball posts 124 have longitudinally spaced-apart horizontal apertures 150 (best shown in Fig. 4) which are aligned with horizontal apertures 152 formed through each of the mounting sleeves 148a, 148b. As such, a peg or pin 154 (see Fig. 3b) engages the apertures 150, 152, to secure each cross frame member 106, 108 to the main frame subassemblies 10, 12 and, the additionally, effect height adjustment of the seat 16. Preferably, four-ball retention pins 154 having T-handles or knobs are employed to facilitate insertion and removal without the need for special tools.

The cross members 106, 108 are mounted between the main frame subassemblies 10, 12, i.e., with the ball posts 124 received and suitably adjusted (vertically) within the mounting sleeves 148. The span bars 106_{B}, 108_{B} are then in position to receive channels 102, 104. With the channels 102, 104 mounted to the underside 16U of the seat 16, the aft channel 104 is caused to address the aft span bar 108_{B} on angle and slid rearwardly until the channel 104 is fully seated (illustrated in phantom in Fig. 4). The seat 16 is then rotated downwardly to cause the forward channel 102 to engage the forward span bar 106_{B} (illustrated by solid lines in the figure). As such, the aft support channel 104 engages the span bar 108_{B} to retain the seat in a substantially vertical direction, i.e., the seat 16 will not lift vertically off the span bar 108_{B}. Furthermore, the forward support channel 102 engages span bar 106_{B} to retain the seat in a substantially longitudinal direction i.e., retaining the seat 16 in a forward and aft direction.

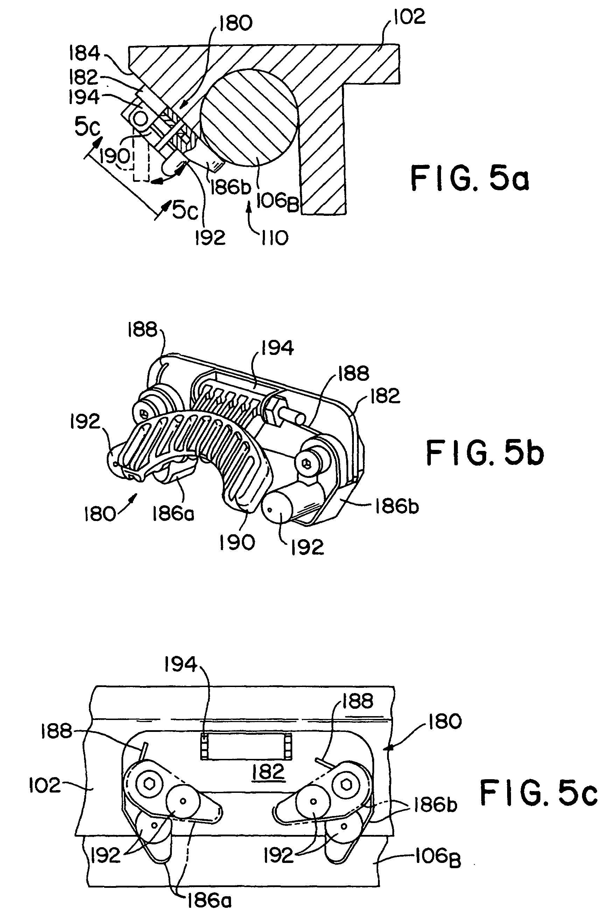

While the weight of the seat and occupant may be deemed sufficient to effect passive engagement of the channels 102, 104 with the respective span bars 106_{B}, 108_{B}, it is preferable to employ a latching mechanism to effect positive engagement of the channels 102, 104 with their respective cross members 106, 108. In Figs. 4, 5a - 5c, a latching mechanism 180 is affixed to the forward channel 102 for maintaining the position of the span bar 106_{B}. More specifically, the latching mechanism 180 includes a mounting plate 182 affixed to a negatively sloping face surface of 184 (Fig. 5a) of the forward channel 102. Retention fingers 186a, 186b are pivotally mounted to the base plate 182 and project downwardly and rearwardly to partially close the channel opening 110. The fingers 186a, 186b are torsionally-biased to a fully-extended position by means of a torsion spring 188 (only the ends are visible in Figs. 5b and 5c). Further, the fully-extended position is shown in solid lines in Fig. 5c.

In addition to the torsion spring 188, the retention fingers 186a, 186b are held in the fully-extended position by a Y-shaped block 190 which abuts a pair of thumb release handles 192. The block 190 is pivotally mounted to a bracket 194 of the latch plate 182 and may be rotated to a "stop" or "release" position. Fig. 5a shows the stop position of the block 190 in solid lines and the release position in phantom or dashed lines. Further, the block 190 has been omitted from Fig. 5c to more clearly illustrate the "release" position of the retention fingers 186a, 186b. With the block 190 rotated to the stop position, the engagement fingers 186a, 186b are fully-extended and partially close the opening 110 to positively retain the span bar 106_{B} in the channel 102. With the block 190 rotated to the release position (see Fig. 5a), the engagement fingers 186a, 186b are rotated inwardly (as best seen Fig. 5c) to provide additional clearance in the opening, thus releasing the span bar 106_{B}. Hence, with the seat 16 in its resting position, i.e., channels 102, 104, resting upon the span bars 106_{B}, 108_{B}, the occupant need only stand up, reach down under the seat 16, lift/rotate the stop block 190 and squeeze the thumb release handles 192 to engage or disengage the seat 16.

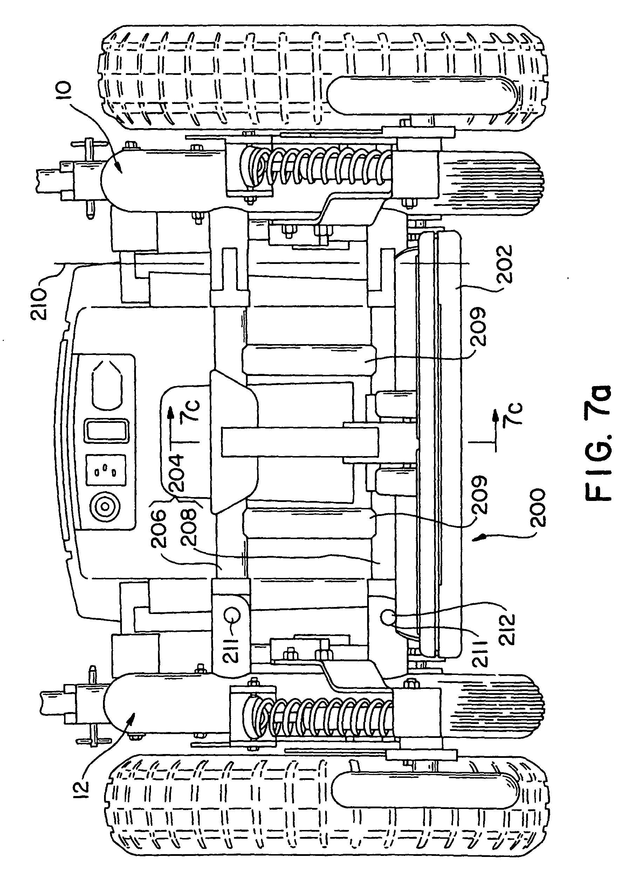

While, in the preferred embodiment, the span bars 106_{B}, 108_{B} are mounted in combination with each of the vertical posts 124 by ball clamps 116, 118, a variety of other detachable mounting the arrangements may be employed or are envisioned. For example, in Fig. 6, a cross member 106 may employ a simple L-bracket 196 to functionally replace a ball clamp. Therein, a threaded nut or bolt 196 may threadably engage the vertical post 124 about a vertical axis 196_{A} aligned with the longitudinal axis 124_{A} of the post 124. As such, by loosening the nut or bolt 196, the span bars 106_{B} may rotate about the longitudinal axis 124_{A} of the post 124. Alternatively, a simple U-shaped cross bar (not shown) may be employed, however, this configuration limits the ability to re-position the cross bars, i.e., from a position which spans the main frame subassemblies to a position along the same subassembly. That is, without the ability to change the position of the vertical post along a span bar, the spacing between (i) the mounting sleeves from one main frame subassembly to the other and (ii) between a pair of sleeves on the same main frame subassembly would necessarily be equal.

### Footrest/Footrest Support Assembly

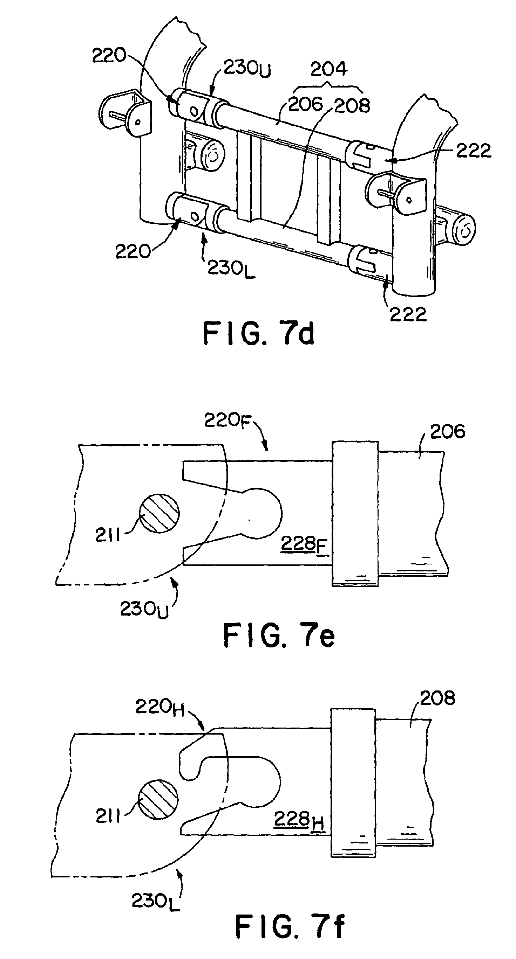

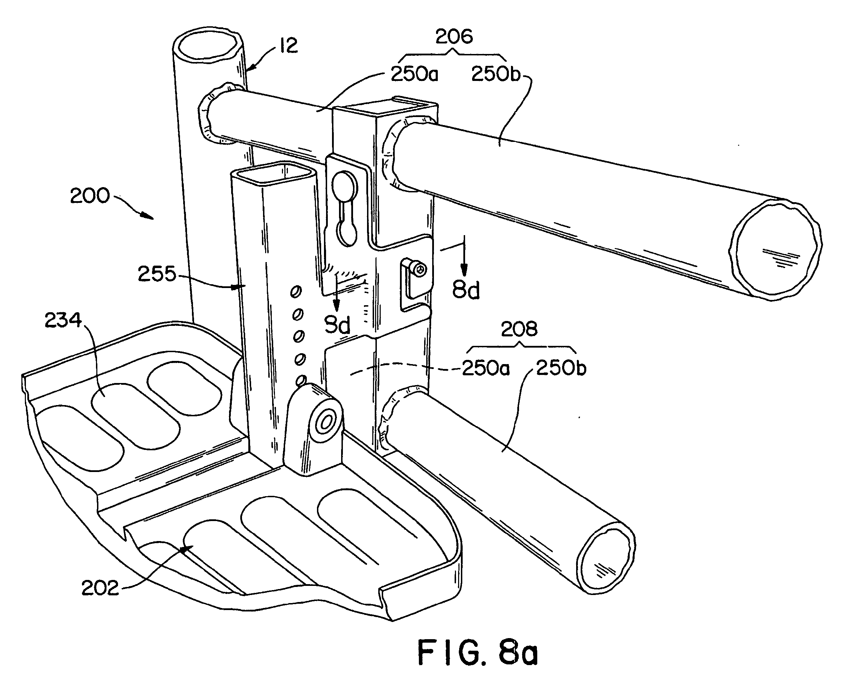

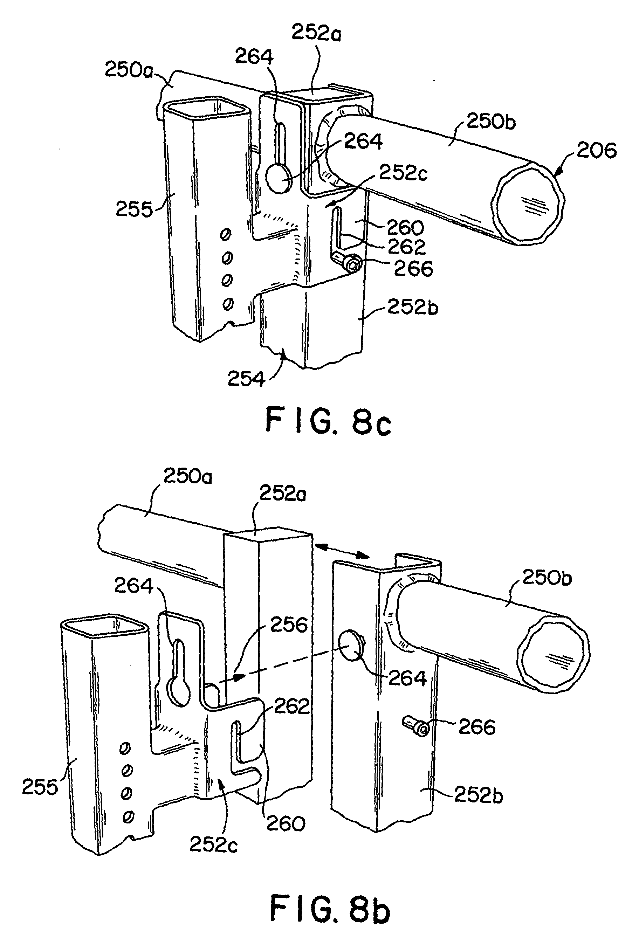

In Figs. 7a - 8d, a footrest support assembly 200 comprises a footrest 202 is disposed forwardly of each main frame subassembly 10, 12 and in combination with at least one cross member 204. In a first embodiment of the invention shown in Figs. 7a - 7f, the footrest 202 is supported by the cross members 206, 208 and is not in the load path for structurally interconnecting the main frame subassemblies 10, 12. In a second embodiment of the invention shown in Figs. 8a - 8d, the footrest 202 bridges a separation of the cross members 206, 208 and is in the load path to structurally interconnect the cross members 206, 208. Hence, in this embodiment, the foot rest 202 additionally functions to structurally interconnect the main frame subassemblies 10, 12.

In Figs. 7a - 7c, the footrest support assembly 200 preferably comprises a pair of cross members 206, 208 which span the length between the main frame subassemblies 10, 12. In the described embodiment, the cross members 206, 208 are connected by a pair of vertical stanchions 209 to integrate and strengthen the pair. The cross members 206, 208 have an end which share a common hinge axis 210 for mounting to one of the main frame subassemblies 10, 12. In the described embodiment, the pair of cross members 206, 208 are hinged to the near side subassembly 10. The other end of the cross members 206, 208 is adapted to detachably mount to the other main frame subassembly 12 by removable pins 211. In the preferred embodiment, at least one of the pins 211 defines an axis 212 which is substantially orthogonal to the hinge axis 210. That is, while not lying in the same plane, the axes 210, 212 are at right angles to each other in a side view projection.

In Figs. 7d - 7f, the hinged and pinned connections, 220 and 222, respectively, do not necessarily require separate retention pins 211 to effect engagement between the ears 226 and tongue 228 of the clevis joint 230. For example, in Fig. 7e, the tongue 228_{F} may be forked to permit engagement about the pin 211. In the preferred embodiment, the upper clevis joint 230_{U} employs the forked tongue 228_{F} while the lower clevis joint 230_{L} employs a hooked tongue 228_{H} to augment the lateral retention provided by the cross members 204.

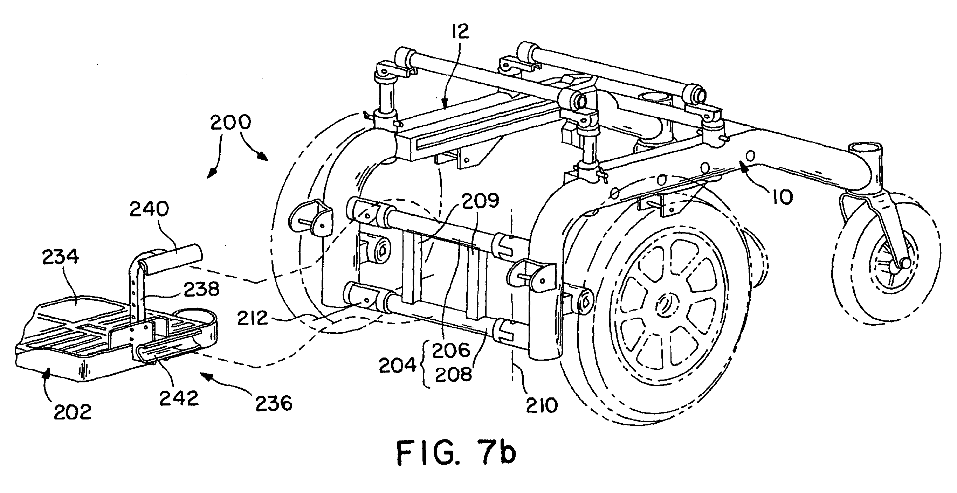

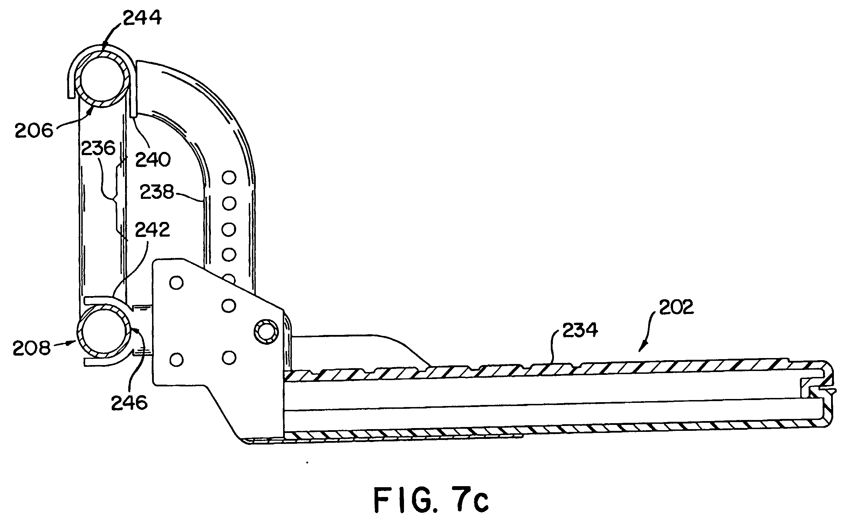

Referring again to Figs. 7b and 7c, the foot rest 202 includes a foot plate 234 having a substantially planar surface and a bracket assembly 236 adapted to detachably mount the foot rest 202 to the cross members 206, 208. More specifically, the bracket assembly 236 comprises a vertical tie bar 238 and a pair of U-shaped channels 240, 242. The vertical tie bar 238 is affixed to an aft end of the foot plate 234 and, when assembled, is substantially orthogonal to the planar surface of the foot plate 234. The first U-shaped channel 240 is affixed to an upper end of the vertical tie bar 238 and has an opening to 244 facing downwardly to engage the upper cross member 204a. The second U-shaped channel 242 is affixed to a lower end of the vertical tie bar 238, or, alternatively, to the aft end of the foot plate 234. The second channel 242 has an opening 246 facing aft to engage the lower cross member 204b. As such, the first or upper channel 240 supports the foot plate 234 and a vertical direction and the second or lower channel 242 supports the foot plate 234 in a horizontal or longitudinal direction. The width of the channels spans at least ten percent (10%) of the total width of the cross members 204 to steady the foot rest assembly 200 rotationally about a vertical axis 230 (see Fig 7c).

In Figs. 8a - 8d, the footrest support assembly 200 is shown wherein a detachable mount is disposed midway between the cross members 206, 208. That is, a portion or segment of each of the cross members 250a, 250b remains affixed to each of the main frame subassemblies (only the vertical side frame support of the far-side subassembly 12 is shown in Fig. 8a) and extend laterally to a point midway between the subassemblies. Similar segments 250a and 250b (i.e., upper and lower segments) of the cross members 206. 208 are tied by a vertical stanchion, one stanchion 252a having a substantially tubular cross section and the other stanchion 252b having a substantially U-shaped cross section. The stanchions 252a, 252b are mated to form a single vertical support 254.

The footrest 202 is attached to the vertical support 254 (see Figs. 8c and 8d) to couple. i.e., react the loads acting on, the stanchions 252a, 252b. More specifically, the footplate 234 is pivotally mounted to a vertical tie bar 255 having a mounting bracket 252c. The mounting bracket 252c forms a U-shaped channel 256 for capturing the vertical support between the legs 260 of the channel 256. Moreover, the legs 260 of the channel 256 define an L-shaped slot 262a having a rearwardly facing opening 263a. The base 261 of the channel 256 defines a key slot 262b having an enlarged circular opening 263b. Engaging the slots 262a, 262b are pins 264, 266 which protrude from at least two sides of the vertical support 254. By aligning the pins 264, 266 with the openings 263a, 263b of the slots 262a, 262b, the channel 256 may seat upon the vertical support 254 and slide downwardly to fully engage the slots 262a, 252b. Consequently, the vertical stanchions 252a, 252b and the mounting bracket 252c are disposed in combination to form an integrated structure capable of reacting and transferring the loads across the segments 250a, 250b of the cross members 206, 208.

### Power Supply Support Assembly

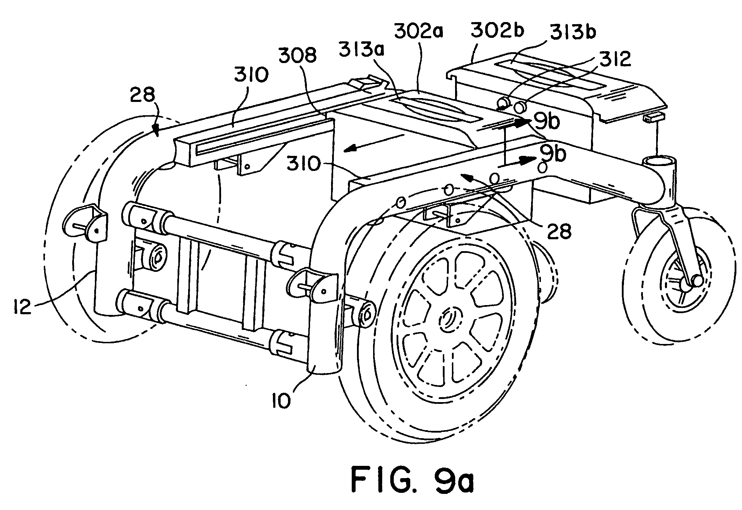

In Figs. 9a - 9d, a power supply unit 300 for providing power to the wheelchair 2 detachably mounts to each of the main frame subassemblies 10, 12. In the described embodiment, the power supply unit 300 comprises two battery boxes 302a, 302b for housing two DC batteries (not shown). Each of the battery boxes 302a, 302b have flanges 304 projecting laterally to each side of the boxes 302a. 302b and each flange 304 thereof includes a runner 308 along its peripheral edge. The runners 308 slideably engage rails 310 which mount to the main frame subassemblies 10, 12. More specifically, each rail 310 is disposed in combination with the upper side frame support 28 of each of the main frame subassemblies 10, 12. The rails 310 are generally parallel and adapted in length to receive two tandem battery boxes 302a, 302b.

Each of the battery boxes 302a, 302b are slid longitudinally into the rails 310 and have intermediate connectors 312 disposed between the boxes to electrically connect the battery boxes 302a, 302b. Handles 313a, 313b are provided along the upper surface of the battery boxes 302a, 302b to facilitate lifting and manipulation as the boxes 302a, 302b are slid into or out of the rails 310. In Fig. 9c, when the runners 308 of the boxes 302a, 302b are fully engaged, a plug 314 connected electrically to the rear box 302b may be inserted into a receptacle 316 mounting to the underside of one of the rails 310. The receptacle 316 is electrically connected to supply power to the electrical systems of the wheelchair 2. A retention pin 318 projects upwardly into the channel 320 of the rail 310 to ensure that the power supply unit 300 will not inadvertently slide rearwardly out of engagement i.e., upon an acceleration of the powered wheelchair 2. As may be seen from Figure 9d, the retention pin 318 may be recessed into an aperture 319 within the rail 310 against the biasing force of a spring 321 when the weight of the battery box 302, i.e., applied by the rail thereof, urges the pin 318 downwardly. When the battery box 302 has passed the retention pin 318 in the channel 320, the biasing force of the spring causes the retention pin 318 to project upwardly into the channel 320. The retention pin 318 is so shaped that the runner 304 of the battery box sliding against it from the front, that is to say, from the installed position, cannot urge the pin 318 downwardly. However, for ease of installation, the front end of the rail 304 and/or the rear face of the retention pin 318 may be shaped so that the retention pin 318 is automatically deflected downwards when the battery box 302 is pushed into the rails 310. Instead, the retention pin 318 may be retracted manually, by operating a lever 324.

A further safety feature is provided by a latching mechanism 322 that is disposed in combination with the retention pin 318. The latching mechanism 322 is operable to prohibit electrical connectivity between the plug 314 and receptacle 316 until the runner 304 has fully engaged the rail 310, that is to say, has slid past the retention pin 318. More specifically, the lever 324, which forms part of the latching mechanism 322, is arranged to interfere with the plug/receptacle engagement when the battery boxes 302a, 302b are not fully installed. That is, the lever 324 rotates downwardly to block the insertion of the plug 314 into the receptacle 316 when the retention pin 318 is recessed i.e., when the weight of the battery box 302b is on the retention pin and, consequently, not fully engaged. The lever 324 can only rotate to a non-interfering position when the retention pin 318 is fully extended i.e., when the rail 308 has passed the retention pin and the weight of the box 302b is not acting on the pin 308. The battery boxes 302a, 302b cannot be released except by rotating the lever to retract the retention pin into the aperture 319, and the lever cannot be rotated unless the plug 314 is first removed, disconnecting the electrical power supply to the wheelchair 2. In the preferred embodiment, a single latch mechanism 322, along one of the rails 310, is employed to avoid the complexities and cost of redundant latch mechanisms.

Thus far in the discussion, only the seat and footrest supporting cross members 106, 108, 206, 208 have been identified as elements which structurally integrate the main frame subassemblies 10, 12. While the power supply support assembly 300 does not employ span bars or tubular members, conventionally viewed as a cross member structure, portions of the power supply unit have a function substantially analogous to the cross members 106, 108, 206, 208. That is, the upper portion 330 of the battery boxes 302a, 302b, i.e., the housing lids, are structural and function to react/transfer lateral loads across and between the main frame subassemblies 10, 12. Further, the upper portion 330 of each functions to react compressive loads between the subassemblies 10, 12, i.e., compressive loads which are not carried by the seats supporting cross members 106, 108. It will be recalled that these cross members 106 108 employ a slideable collar 120 which, it will be appreciated, will not carry compressive loads i.e., loads tending to urge the main frame subassemblies 10, 12 together. Hence, compressive, tensile and torsional loads are carried by and between the runners 308 of the battery boxes 302a, 320b.

### Assembly/Disassembly of the Transportable Wheelchair

In Fig. 10a, the transportable wheelchair is assembled by first standing the near side (in the Figure) main frame subassembly 10 in an upright position. The frontal cross members 206, 208 are hinged so as to assume a right angle relative to the side frame support 18. The far side subassembly 12 is initially positioned horizontally while the hooked-shaped tongue 228_{H} of the lower clevis 230_{L} engages the respective pin 210. With the tongue 228_{H} in place, the main frame subassembly 12 is rotated about the pin axis 211 to effect engagement of the forked tongue 228_{F} of the upper clevis 230_{U}. Next, and referring to Figs. 9c and 10b, the battery boxes 302a, 302b are slid forwardly into engagement with the rails 310 until the rear battery box 302b passes beyond the retention pin 318 (Figs. 9c and 9d), so that the retention pin projects upwardly by the force of the spring to engage the rear battery box 302b from behind and prevent it from sliding back. As was mentioned earlier, the lever 324 may now be rotated to a non-interfering position to allow the plug 314 to engage the receptacle 316.

Referring again to Fig. 10a, the cross members 106, 108 of the seat support assembly 100 are reconfigured from their previous operating position i.e., as a handle. The cross members 106, 108, are rotated, in the direction of arrow R1 to assume an orthogonal position relative to the side frame support 18, while at the same time, the ball clamps 116, 118 are repositioned i.e., slid along the span bars in the direction of arrow R2, to their maximum length. As such, the cross members 106, 108 are suitably configured to span the distance between the main frame subassemblies 10, 12. The vertical posts 124 are caused to engage the mounting sleeves 148a, 148b on the upper portion 28 of the side frame support 28. In Figs. 4 and 10a, the retention pins 154 are inserted into the aligned apertures 150, 152 to engage the cross members 106, 108 and adjust the vertical height as may be required.

The seat 16 (Fig. 4) is then positioned to cause the forward and aft channels 102, 104 to engage the span bars 106, 108. That is, the seat is angled upwardly to cause the rear channel 104 to engage the aft span bar 108, slid rearwardly to fully seat the aft channel 104. The latching mechanism 180 is opened to allow the forward channel 102 to engage the forward span bar 106 as the seat 16 is rotated downwardly. The thumb release handles 192 (see Fig. 5c) are released to allow the torsionally-biased fingers 186a, 186b to close the opening 110 of the forward channel 102.

In an alternate embodiment of the invention, a rear cross member 406 may be employed to stiffen the main frame subassemblies 10, 12 proximal to the rear casters 23. In this embodiment, slots 410, 412 may be formed in each side frame support 18 to accept a pair of movable flanges 414, 416 of the rear cross member 406. A latching mechanism 420 having a rotatably lever 422 is operable to displace the flanges 414, 416, thereby engaging the ends thereof with each of the side supports 18. Details of the latching mechanism are not shown inasmuch as a variety of options are available to a designer and one method is not preferred to another. Suffice it to say that the rear cross member detachably engages each of the side frame supports 18 of the main frame subassemblies 10,12.

The disassembly is essentially the reverse of the foregoing assembly steps and, in the interest of brevity, will not be reiterated herein. The various assembly/disassembly steps may be arranged in a different order, depending upon the clearance provided between elements. For example, the battery boxes may be installed before or after the seat supporting cross members 106, 108 have been attached to the main frame subassemblies 10, 12.

In summary, the transportable powered wheelchair of the present invention is modularized to separate the wheelchair into manageable sections or modules. The powered wheelchair 2 is separated into five (5) such sections, namely, two (2) main frame subassemblies 10, 12, a seat 16, and two (2) batteries 302a, 302b. Inasmuch as the propulsion system comprises a pair of drive train subassemblies 20, i.e., one for each of the main frame subassemblies 10, 12, the powered wheelchair 2 may be split longitudinally into substantially equal halves.

Further, the cross members 106, 108, 206, 208 may be reconfigured to either function as handles or hinge to a stowed position (i.e., the frontal cross members are hinged rearwardly) to streamline the main frame subassembly for handling and transport. Consequently, the cross members 106, 108, 206, 208 are not individual elements, i.e., to be disassembled/reassembled, but remain connected to one of the modules. Moreover, the ball clamps 122 and other latching mechanisms such as the span bar latch mechanism 180 enable the ability to quickly connect and/or disconnect of the cross bars without necessitating special tools or separate elements such as pins or pegs. Even those elements which employ pins such as the mounting sleeves 148a, 148b do not require the removal of the pins 154 to separate the wheelchair modules. That is, the pins 154 will only be removed to vary the height of the seat (which should occur infrequently, assuming that only one person is operating the wheelchair on a daily basis). Further, the clevis joints 230_{U}, 230_{L} may employ fixed pins 211, i.e., when using the forked and hooked tongues 228_{F}, 228_{H}, to further reduce the need for small individual elements which may be lost or assembled incorrectly.

A variety of modifications to the embodiments described will be apparent to those skilled in the art from the disclosure provided herein. For example, while the seat 16 is detachably mounted to the seat supporting cross members 106, 108, it may also be detachably mounted directly to the side frame supports 18 of the main frame subassemblies 10, 12, For example, ball clamps 122 may be disposed in combination with the underside of the seat to directly connect to the ball posts 124. Further, while the batteries 302a, 320b are shown as having a runner disposed in combination with a rail, other detachable mounting schemes may be employed. For example, the battery boxes may include J-hooks for being hung upon a longitudinal rod disposed along the side frame supports of the main frame subassemblies. Moreover, a footrest assembly may only be incorporated as an option, and, therefore, may not be disposed in combination with the frontal cross members.

Thus, the present invention may be embodied in other specific forms without departing from the spirit or essential attributes thereof and, accordingly, reference should be made to the appended claims, rather than to the foregoing specification, as indicating the scope of the invention.

## Claims

1. A powered wheelchair adapted to facilitate transport, said powered wheelchair having a power supply unit, a pair of primary drive wheels, a drive train subassembly rotatably mounting and independently driving one of the drive wheels, the powered wheelchair further comprising:
first and second main frame subassemblies each mounting one of the drive train subassemblies and detachably mounting the power supply unit therebetween;
at least one cross member connecting said main frame subassemblies when assembled for operation, said cross member being detachable to separate said subassemblies during transport;
said first and second main frame subassemblies and said cross member, in combination, defining a main frame assembly; and
a seat detachably mounted to said main frame assembly

2. The powered wheelchair according to claim 1 further comprising:
at least one seat supporting cross member having at least one end detachably mounting to one of said main frame subassemblies; and
said seat detachably mounting to said seat supporting cross member.

3. The powered wheelchair according to claim 2 wherein at least one of said seat supporting cross members comprises:
a substantially horizontal span bar,
a substantially vertically oriented post connecting to each of the main frame subassemblies, and
a means for detachably mounting an end of said span bar to one of said vertical posts, and a means for pivotally mounting the other end of said span bar to the other vertical post about its longitudinal axis.

4. The powered wheelchair according to claim 3 wherein said span bar extends laterally from one of said main frame subassemblies to the other, wherein each of said vertical posts has a spherical head and,
said detachment means includes a ball clamp disposed at each end of said span bar for detachably mounting to said spherical head of each said ball post.

5. The powered wheelchair according to claim 2 wherein,
when assembled for operation, said seat supporting cross member having each end thereof mounting to each of the main frame subassemblies to structurally interconnect said subassemblies, and
when disassembled for transport, said seat supporting cross member having both ends thereof mounting to the same main frame subassembly to function as a handle for manipulating said subassembly.

6. The powered wheelchair according to claim 5 wherein at least one of said seat supporting cross members comprises:
a substantially horizontal span bar,
a substantially vertically oriented post connecting to each of the main frame subassemblies, and
a means for detachably mounting an end of said span bar to one of said vertical posts, and a means for pivotally mounting the other end of said span bar to the other vertical post about its longitudinal axis.

7. The powered wheelchair according to claim 6 wherein said span bar extends laterally from one of said main frame subassemblies to the other, wherein each of said vertical posts have a spherical head and,
said detachment means includes a ball clamp disposed at each end of said span bar for detachably mounting to said spherical head of each said ball post.

8. The powered wheelchair according to claim 5 wherein at least one of said seat supporting cross members is pivotally and articulately mounted to one of said main frame subassemblies.

9. The powered wheelchair according to claim 2 wherein each of said cross members is vertically adjustable to vary the height thereof relative to the main frame subassemblies.

10. The powered wheelchair according to claim 5 wherein at least one of said cross members is pivotally and articulately mounted to one of said side frame supports.

11. The powered wheelchair according to claim 5 wherein at least one said seat supporting cross members comprises:
a substantially horizontal span bar, and
a substantially vertical post mounted to each end of said span bar, each of said posts having a series of longitudinally spaced-apart horizontal apertures, and
wherein each of the main frame subassemblies includes
a sleeve disposed along an upper side frame support thereof, each of said sleeves having a vertical aperture for accepting said vertical post and
at least one horizontal aperture for being aligned with one of said horizontal apertures of said vertical post, and
said further comprising,
a pin for engaging said aligned apertures for adjusting the vertical height of said cross member.

12. The powered wheelchair according to claim 4 wherein said detachment means includes:
a ball-clamp having a socket and
a spherical head disposed in combination with said vertical post to define a ball post,
said socket having a pair of spaced-apart parallel pins and an activation lever,
one of said pins being mounted within a slot to permit relative motion therebetween and each of said pins being disposed on each said of a ball post,
said activation lever being operable to vary the spacing the pins to capture and release the spherical head of the ball post.

13. The powered wheelchair according to claim 5 wherein said cross members each comprise:
a substantially horizontal span bar,
a pair of substantially vertically oriented posts, each of said posts mounting to one of the main frame subassemblies,
a means for detachably mounting an end of said span bar to one of said vertical posts, and
a means for pivotally mounting the other end of said span bar to the other vertical post about its longitudinal axis, and
wherein said first and second main frame subassemblies each include a pair of sleeves disposed along an upper side frame support thereof, each of said sleeves having a vertical aperture for accepting one of said vertical posts, and
said detachable mounting means further comprising a collar slideably engaging said span bar for accommodating the spacing between said pair of vertical posts when operating said wheelchair and for accommodating the spacing between vertical posts of the same main frame subassembly when transporting said wheelchair.

14. The powered wheelchair according to claim 1 further comprising:
at least one frontal cross member detachably mounting to one of said main frame subassemblies.

15. The powered wheelchair according to claim 14 further comprising:
a footrest assembly detachably mounting to said frontal cross member.

16. The powered wheelchair according to claim 15 further comprising
a pair of frontal cross members, one end of the pair being hinge mounted to one of the main frame subassemblies and the other end of said pair being detachably mounted to the other of said main frame subassemblies.

17. The powered wheelchair according to claim 16
wherein said hinge mount defines a hinge axis, and
wherein said detachable mount defines a pin axis, said pin axis being orthogonal to said hinge axis.

18. The powered wheelchair according to claim 16
wherein said other end of the pair includes upper and lower clevis attachments, said upper clevis having a forked tongue engaging a fixed clevis pin, and said lower clevis attachment having a hooked tongue engaging a fixed clevis pin.

19. The powered wheelchair according to claim 14 further comprises
a pair of cross members, each said cross member including a segment being affixed to each of said main frame subassemblies, said segment extending laterally to a point midway between said subassemblies, and
wherein said footrest assembly structurally interconnects said segments.

20. The powered wheelchair according to claim 19
wherein similar segments of each cross member are connected by a vertical stanchion, one of said stanchions having a substantially tubular cross section and the other of said stanchions having a substantially U-shaped cross section, said stanchions being mated to form a single vertical support, and
wherein said footrest assembly structurally interconnects said vertical support.

21. The powered wheelchair according to claim 20 wherein said footrest assembly includes a bracket defining a U-shaped channel having a pair of parallel legs, said U-shaped channel capturing the vertical support between said parallel legs of said channel.

22. The powered wheelchair according to claim 1
wherein said power supply unit comprises at least one battery box having runners disposed along the lateral edges thereof; and
wherein each main frame subassembly has a rail mounting along a side frame support thereof,
said runners slideably engaging said rails to structurally interconnect said main frame subassemblies.

23. The powered wheelchair according to claim 22 further comprising a receptacle for receiving electric power from said power supply unit and a latching mechanism for prohibiting electrical connectivity therebetween until said runner has fully engaged said rail.

24. The powered wheelchair according to claim 23 wherein said battery box includes a plug and wherein said latching mechanism includes:
a spring biased retention pin positionable within a channel of said rail, said retention pin being depressed into a recess by said battery box prior to full engagement of said battery box relative to said rail, and projecting outwardly into said channel to retain said battery box when said battery box is fully engaged,
a lever, responsive to the position of said pin, for being rotated into an interfering position between said plug and said receptacle when said pin is recessed and capable of being rotated out of an interfering position when said pin projects into said channel.

25. The powered wheelchair according to claim 1 further comprising:
at least one seat supporting cross member detachably mounting to one of said main frame subassemblies;
a pair of frontal cross member detachably mounting to one of said main frame subassemblies; and
wherein said power supply unit comprises at least one battery box having runners disposed along the lateral edges thereof; and
wherein each main frame subassembly has a rail mounting along a side frame support thereof,
said runners slideably engaging said rails to structurally interconnect said main frame subassemblies, and
said seat detachably mounting to said seat supporting cross member.

26. The powered wheelchair according to claim 25
wherein at least one of said seat supporting cross members comprises:
a substantially horizontal span bar,
a substantially vertically oriented post connecting to each of the main frame subassemblies, and
a means for detachably mounting an end of said span bar to one of said vertical posts, and a means for pivotally mounting the other end of said span bar to the other vertical post about its longitudinal axis;
wherein one end of said pair of frontal cross members is hinge mounted to one of the main frame subassemblies and the other end of said pair is detachably mounted to the other of said main frame subassemblies;
and further comprising:
a receptacle for receiving electric power from said power supply unit; and
a latching mechanism for prohibiting electrical connectivity therebetween until said runner has fully engaged said rail.

27. A powered wheelchair adapted to facilitate transport, said powered wheelchair having a power supply unit, a pair of primary drive wheels, a drive train subassembly rotatably mounting and independently driving one of the drive wheels, the powered wheelchair further comprising:
first and second main frame subassemblies each mounting one of the drive train subassemblies and detachably mounting the power supply unit therebetween;
at least one cross member connecting said main frame subassemblies when assembled for operation, said cross member having a detachable mount disposed at a position between said main frame subassemblies and having at least a portion of said cross member remaining attached to one of said subassemblies when disassembled for transport;
said first and second main frame subassemblies and said cross member, in combination, defining a main frame assembly; and
a seat detachably mounted to said main frame assembly.

28. The powered wheelchair according to claim 27 further comprising:
at least one seat supporting cross member having at least one end detachably mounting to one of said main frame subassemblies; and
said seat detachably mounting to said seat supporting cross member.

29. The powered wheelchair according to claim 28 wherein at least one of said seat supporting cross members comprises:
a substantially horizontal span bar,
a substantially vertically oriented post connecting to each of the main frame subassemblies, and
a means for detachably mounting an end of said span bar to one of said vertical posts, and a means for pivotally mounting the other end of said span bar to the other vertical post about its longitudinal axis.

30. The powered wheelchair according to claim 29 wherein said span bar extends laterally from one of said main frame subassemblies to the other, wherein each of said vertical posts has a spherical head and,
said detachment means includes a ball clamp disposed at each end of said span bar for detachably mounting to said spherical head of each said ball post.

31. The powered wheelchair according to claim 28 wherein,
when assembled for operation, said seat supporting cross member having each end thereof mounting to each of the main frame subassemblies to structurally interconnect said subassemblies, and
when disassembled for transport, said seat supporting cross member having both ends thereof mounting to the same main frame subassembly to function as a handle for manipulating said subassembly.

32. The powered wheelchair according to claim 31 wherein at least one of said seat supporting cross members comprises:
a substantially horizontal span bar,
a substantially vertically oriented post connecting to each of the main frame subassemblies, and
a means for detachably mounting an end of said span bar to one of said vertical posts, and a means for pivotally mounting the other end of said span bar to the other vertical post about its longitudinal axis.

33. The powered wheelchair according to claim 32 wherein said span bar extends laterally from one of said main frame subassemblies to the other, wherein each of said vertical posts have a spherical head and,
said detachment means includes a ball clamp disposed at each end of said span bar for detachably mounting to said spherical head of each said ball post.

34. The powered wheelchair according to claim 31 wherein at least one of said seat supporting cross members is pivotally and articulately mounted to one of said main frame subassemblies.

35. The powered wheelchair according to claim 28 wherein each of said cross members is vertically adjustable to vary the height thereof relative to the main frame subassemblies.

36. The powered wheelchair according to claim 31 wherein at least one of said cross members is pivotally and articulately mounted to one of said side frame supports.

37. The powered wheelchair according to claim 31 wherein at least one said seat supporting cross members comprises:
a substantially horizontal span bar, and
a substantially vertical post mounted to each end of said span bar, each of said posts having a series of longitudinally spaced-apart horizontal apertures, and
wherein each of the main frame subassemblies includes
a sleeve disposed along an upper side frame support thereof, each of said sleeves having a vertical aperture for accepting said vertical post and
at least one horizontal aperture for being aligned with one of said horizontal apertures of said vertical post, and
said further comprising,
a pin for engaging said aligned apertures for adjusting the vertical height of said cross member.

38. The powered wheelchair according to claim 30 wherein said detachment means includes:
a ball-clamp having a socket and
a spherical head disposed in combination with said vertical post to define a ball post,
said socket having a pair of spaced-apart parallel pins and an activation lever,
one of said pins being mounted within a slot to permit relative motion therebetween and each of said pins being disposed on each said of a ball post,
said activation lever being operable to vary the spacing the pins to capture and release the spherical head of the ball post.

39. The powered wheelchair according to claim 31 wherein said cross members each comprise:
a substantially horizontal span bar,
a pair of substantially vertically oriented posts, each of said posts mounting to one of the main frame subassemblies,
a means for detachably mounting an end of said span bar to one of said vertical posts, and
a means for pivotally mounting the other end of said span bar to the other vertical post about its longitudinal axis, and
wherein said first and second main frame subassemblies each include a pair of sleeves disposed along an upper side frame support thereof, each of said sleeves having a vertical aperture for accepting one of said vertical posts, and
said detachable mounting means further comprising a collar slideably engaging said span bar for accommodating the spacing between said pair of vertical posts when operating said wheelchair and for accommodating the spacing between vertical posts of the same main frame subassembly when transporting said wheelchair.

40. The powered wheelchair according to claim 27 further comprising:
at least one frontal cross member detachably mounting to one of said main frame subassemblies.

41. The powered wheelchair according to claim 40 further comprising:
a footrest assembly detachably mounting to said frontal cross member.

42. The powered wheelchair according to claim 41 further comprising
a pair of frontal cross members, one end of the pair being hinge mounted to one of the main frame subassemblies and the other end of said pair being detachably mounted to the other of said main frame subassemblies.

43. The powered wheelchair according to claim 42
wherein said hinge mount defines a hinge axis, and
wherein said detachable mount defines a pin axis, said pin axis being orthogonal to said hinge axis.

44. The powered wheelchair according to claim 42
wherein said other end of the pair includes upper and lower clevis attachments, said upper clevis having a forked tongue engaging a fixed clevis pin, and said lower clevis attachment having a hooked tongue engaging a fixed clevis pin.

45. The powered wheelchair according to claim 40 further comprises
a pair of cross members, each said cross member including a segment being affixed to each of said main frame subassemblies, said segment extending laterally to a point midway between said subassemblies, and
wherein said footrest assembly structurally interconnects said segments.

46. The powered wheelchair according to claim 45
wherein similar segments of each cross member are connected by a vertical stanchion, one of said stanchions having a substantially tubular cross section and the other of said stanchions having a substantially U-shaped cross section, said stanchions being mated to form a single vertical support, and
wherein said footrest assembly structurally interconnects said vertical support.

47. The powered wheelchair according to claim 46 wherein said footrest assembly includes a bracket defining a U-shaped channel having a pair of parallel legs, said U-shaped channel capturing the vertical support between said parallel legs of said channel.

48. The powered wheelchair according to claim 27
wherein said power supply unit comprises at least one battery box having runners disposed along the lateral edges thereof; and
wherein each main frame subassembly has a rail mounting along a side frame support thereof,
said runners slideably engaging said rails to structurally interconnect said main frame subassemblies.

49. The powered wheelchair according to claim 48 further comprising a receptacle for receiving electric power from said power supply unit and a latching mechanism for prohibiting electrical connectivity therebetween until said runner has fully engaged said rail.

50. The powered wheelchair according to claim 49 wherein said battery box includes a plug and wherein said latching mechanism includes:
a spring biased retention pin positionable within a channel of said rail, said retention pin being depressed into a recess by said battery box prior to full engagement of said battery box relative to said rail, and projecting outwardly into said channel to retain said battery box when said battery box is fully engaged,
a lever, responsive to the position of said pin, for being rotated into an interfering position between said plug and said receptacle when said pin is recessed and capable of being rotated out of an interfering position when said pin projects into said channel.

51. The powered wheelchair according to claim 27 further comprising:
at least one seat supporting cross member detachably mounting to one of said main frame subassemblies;
a pair of frontal cross member detachably mounting to one of said main frame subassemblies; and
wherein said power supply unit comprises at least one battery box having runners disposed along the lateral edges thereof; and
wherein each main frame subassembly has a rail mounting along a side frame support thereof,
said runners slideably engaging said rails to structurally interconnect said main frame subassemblies, and
said seat detachably mounting to said seat supporting cross member.

52. The powered wheelchair according to claim 51
wherein at least one of said seat supporting cross members comprises:
a substantially horizontal span bar,
a substantially vertically oriented post connecting to each of the main frame subassemblies, and
a means for detachably mounting an end of said span bar to one of said vertical posts, and a means for pivotally mounting the other end of said span bar to the other vertical post about its longitudinal axis;
wherein one end of said pair of frontal cross members is hinge mounted to one of the main frame subassemblies and the other end of said pair is detachably mounted to the other of said main frame subassemblies;
and further comprising:
a receptacle for receiving electric power from said power supply unit; and
a latching mechanism for prohibiting electrical connectivity therebetween until said runner has fully engaged said rail.
